Europäisches Patentamt

European Patent Office

Office européen des brevets

(11) Publication number: **0 408 314 B1**

## EUROPEAN PATENT SPECIFICATION

(45) Date of publication of patent specification: **22.02.95**  (51) Int. Cl.⁶: **F16H 55/08**, F16H 1/32

(21) Application number: **90307538.0**

(22) Date of filing: **10.07.90**

---

(54) **High-efficiency gear transmission.**

---

(30) Priority: **11.07.89 CN 89104790**

(43) Date of publication of application:
**16.01.91 Bulletin  91/03**

(45) Publication of the grant of the patent:
**22.02.95 Bulletin  95/08**

(84) Designated Contracting States:
**AT BE CH DE DK ES FR GB GR IT LI NL SE**

(56) References cited:
**EP-A- 0 300 108**     **FR-A- 2 592 121**
**GB-A- 1 198 737**     **US-A- 2 049 696**
**US-A- 3 427 901**     **US-A- 3 451 290**
**US-A- 4 446 752**

(73) Proprietor: **Zheng, Yue**
**Room 105, Building 15(old),**
**Beicun,**
**Nankai University**
**Tianjin (CN)**

Proprietor: **Li, Lan**
**Room 105, Building 15(Old),**
**Beicun,**
**Nankai University**
**Tianjin (CN)**

(72) Inventor: **Zheng, Yue**
**Room 105, Building 15(old),**
**Beicun,**
**Nankai University**
**Tianjin (CN)**
Inventor: **Li, Lan**
**Room 105, Building 15(Old),**
**Beicun,**
**Nankai University**
**Tianjin (CN)**

(74) Representative: **Arthur, Bryan Edward et al**
**Withers & Rogers**
**4 Dyer's Buildings**
**Holborn**
**London EC1N 2JT (GB)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

FIELD OF THE INVENTION

The present invention relates in general to a gear pair having a low tooth number differential, and, in particular, to a double internal planetary gear pair having a low tooth number differential as well as a transmission containing such a gear pair.

BACKGROUND OF THE INVENTION

The planetary gear transmission has substantially replaced the fixed-axis gear train transmission in the field of high-efficiency transmissions. However, the primary restriction on further increase in the efficiency of planetary gear transmissions is the limited engagement efficiency of their fixed-axis gear pair and the significant power loss in their planetary bearings. Therefore, a significant advantage exists for an efficient planetary gear transmission having a low tooth number differential that also exhibits a high transmission ratio.

U.S. Patent No. US-A-3 451 290 (Wildhaber) discloses a high-efficiency gear transmission drive comprising cases or housings, an input shaft and an output shaft. Bearings support a double-ring gear assembly comprised of two coaxial gear rings integrated with each other on an eccentric shaft. A gear ring is coaxially located concentrically and radially outside the double-ring gear assembly and has a different number of gear teeth than the outermost gear of the double-ring assembly. The gear transmission drive further comprises two fixed-axis gears. This construction reduces the load on the high-speed bearings. However, Wildhaber does not discuss the mechanical parameters of these gears, the cooperative effects of which impact fundamentally on the operation of the gear transmission drive.

GB-A-1 198 737 (Morozumi) discloses an addendum modified involute internal gearing assembly including coaxially arranged external and internal gears. In order to improve the efficiency of the gearing, Morozumi suggests that the difference of the addendum modification coefficients $X_2$ and $X_1$, respectively, of the internal gear and the external gear shall satisfy the following formula, hereinafter known as Formula (1):

$$[0.0002 \ (\alpha_c)^2 - 0.025 \ \alpha_c + 1.52] \ h_k + 0.8X_1 > X_2 > Kh_k + X_1$$

wherein $\alpha_c$ is standard pressure angle, $h_k$ is the addendum coefficient and K is 1 when the difference in tooth numbers between the gears is 1 and a function of $\alpha_c$ when the tooth number differential is 2.

In the prior art, including Morozumi, $\epsilon_{,\alpha} \geq 1$ (greater or equal) is required for resolving the contradiction of the contact ratio and the interference of an involute internal gear pair having a low tooth number differential. This is because rather than face contact ratio $\epsilon_\beta$

$$(\xi_\beta = \frac{B. \ sin \ \beta)}{\pi.m}$$

wherein B is the width of tooth, $\beta$ is the reference helix angle, $\pi = 3.1416$, and m is the normal module, (m is a standard module when the gear is helical) only the profile contact ratio $\epsilon_\alpha$ (or $\epsilon$ as shown in Morozumi) is taken into account. That is to say, $\epsilon_\alpha$ has a close relationship with addendum coefficient ha (or "$h_k$" as shown in Morozumi, ha equals the ratio between the addendum and the module), but $\epsilon_\beta$ has nothing to do with the addendum coefficient. In the situation (as in Morozumi) wherein only equation $\epsilon_\alpha \geq 1$ is considered, ha cannot be greatly reduced, hence a larger difference of addendum modification coefficients X ($X = X_2 - X_1$, wherein $X_1$ is the addendum modification coefficient of the external gear and $X_2$ is the addendum modification coefficient of the internal gear when the gear pair is an internal one, or $X_1$ and $X_2$ are the addendum modification coefficients of the two gears respectively when the gear pair is an external one) is used to offset the larger ha. As a result, the angle of engagement is larger, thus exacerbating engagement inefficiency and bearing loss. For example, Morozumi defines $\epsilon_\alpha > 1$, even $\epsilon_\alpha > 2$. Under such premise, for the formula put forward in Morozumi (see Formula (1) described above), in order to satisfy the interference condition for correct engagement of an involute internal gear pair having reduced tooth number differential, by adjusting the parameters $X_1$, $X_2$, $h_k$ and $\alpha_c$, a large X should be used, thus reducing the drive efficiency.

The present invention has gone beyond the known definition $\epsilon_\alpha \geq 1$ for an involute internal gearing pair having a low tooth number differential, e.g., 6 or less, and provides that $\epsilon_\alpha < 1$ may be used on condition that

$\epsilon_\beta > 0$ and $\epsilon_\gamma = \epsilon_\alpha + \epsilon_\beta \geq 1$ or even $\epsilon_\gamma = \epsilon_\alpha + \epsilon_\beta \geq 0.7$. Since face contact ratio $\epsilon_\beta$ is meaningful in relationship only to reference helix angle $\beta$, tooth width B and module m, and since it has nothing to do with ha, an increase of $\epsilon_\beta$ does not affect a reduction of ha. As a result, ha may be greatly reduced until ha = 0.06 to 0.2 (when tooth number difference Zd = 1). Therefore, the problem of interference is resolved without increasing the difference in addendum modification coefficient X, and a relation $|X| \leq 0.1$ or even X = 0 may be allowed. Therefore, engagement and transmission efficiency are increased and bearing loss is reduced.

Morozumi '737, on the other hand, defines that $\epsilon_\alpha > 1$. For meeting the requirement that no interference occur, according to Formula (1) described above, the addendum coefficient $h_k$ is difficult to reduce to less than 0.6 (when Zd is equal to 1 or 2), and the difference in addendum modification coefficients X is difficult to reduce to less than 0.5. By contrast, however, the present invention may satisfy that ha < 0.5, $|X| < 0.1$, or even X = 0. Since Formula (1) of Morozumi does not define k when the difference in tooth number Zd is not 1, so $X = X_2 - X_1 > kh_k$ that formula has little substantive meaning when Zd is other than 1. When the difference in tooth number Zd is equal to 1, Morozumi '737 defines that K = 1, so $X_2 \geq h_k + X_1$ or $X_2 - X_1 > h_k$ or $X \geq h_k$ are obtained. It is necessary to point out that when difference in teeth numbers Zd is equal to 1, under the condition that the gears are straight spur gears ($\beta = 0$), $\epsilon_\beta > 1$, and there is no interference (which is defined in Morozumi), the preferred scope of parameters for increasing the efficiency are that X = 0.5 to 0.55, ha = 0.55 to 0.6, i.e. $0.5 < X < h_k < 0.6$ (wherein $h_k$ is ha) and $X = h_k - 0.05$. Thus Formula (1) of Morozumi cannot exist in effective scope to reduce $|X| < 0.5$ as it is confined by the interference condition.

## SUMMARY OF THE INVENTION

The present invention overcomes the disadvantages of the prior art by effectively reducing the absolute value of the difference of addendum modification coefficients $|X|$ to less than or equal to one and, preferably, zero, under the conditions that total contact ratio is relatively high and interference is eliminated, whereby engagement and transmission efficiencies are greatly increased.

In order to realize this object, the invention provides a gear pair having a low tooth number differential. The preferred arrangement comprises an involute internal gear pair including an internal gear and an external gear and having a reference helix angle $\beta$ satisfying $\beta > 0$, a face contact ratio $\epsilon_\beta$ satisfying $\epsilon_\beta > 0$, wherein the gear pair has an addendum coefficient ha, a profile contact ratio $\epsilon_\alpha$ and total contact ratio $\epsilon_\gamma$ satisfying ha < 0.55, $\epsilon_\alpha < 1$ and $\epsilon_\gamma = \epsilon_\alpha + \epsilon_\beta \geq 0.7$, and the relationship among difference in tooth number Zd of the internal gear and the external gear, the absolute value of the difference in addendum modification coefficients X of the internal and the external gear ($X = X_2 - X_1$) and the addendum coefficient ha satisfying the following table:

| Zd | X | ha |
|---|---|---|
| 1 | $|X| \leq 0.1$ | 0.06 to 0.2 |
| 2 | $|X| \leq 0.1$ | $\leq 0.35$ |
| 3 or 4 | $|X| \leq 0.1$ | $\leq 0.5$ |

wherein, preferably, the total contact ratio $\epsilon_\gamma$ of the gear pair satisfies $\epsilon_\gamma = \epsilon_\alpha + \epsilon_\beta \geq 1$.

It is further preferred that the difference in addendum modification coefficients X, addendum modification coefficient of internal gear $X_2$ and external gear $X_1$ satisfy the following relationship: X = 0; $X_2 \geq 0$ and $X_1 \geq 0$. Additionally, the reference helix angle $\beta$ preferably ranges from about 1° to about 14°, if the gear pair is a helical one, and from about 25° to about 60°, if the gear pair is a double helical spur type.

It is also desirable that the profile angle $\alpha$ (or pressure angle in a reference circle) satisfy the following relationship:

| Zd | $\alpha$ |
|---|---|
| 1 | 14° to 25° |
| $\geq 2$ | 6° to 14° |

According to another aspect of the invention, there is provided a gear pair having a low tooth number differential, wherein the gear pair is an involute internal gear pair and includes an internal gear and an external gear, such that the gear pair has a reference helix angle $\beta$ satisfying $\beta = 0$, a face contact ratio $\epsilon_\beta$ satisfying $\epsilon_\beta = 0$, total contact ratio $\epsilon_\gamma$ satisfying $\epsilon_\gamma = \epsilon_\alpha + \epsilon_\beta \geq 0.7$, a tooth number differential between the internal gear and external gear Zd satisfying Zd = 4 to 6, and an absolute value of the difference in addendum modification coefficients |X| satisfying |X| <0.05 and an addendum coefficient ha satisfying ha = 0.35 to 0.6. It is again preferred that the absolute value of the difference in addendum modification coefficients |X| be equal to zero.

According to a further aspect of the invention, there is provided a gear pair having a low tooth number differential, wherein the gear pair is an involute external gear pair and includes an internal gear and an external gear, such that the gear pair has a reference helix angle $\beta$ satisfying $\beta>0$, a face contact ratio $\epsilon_\beta$ satisfying $\epsilon_\beta>0$, a profile contact ratio $\epsilon_\alpha$ satisfying $\epsilon_\alpha<1$, a total contact ratio $\epsilon_\gamma$ satisfying $\epsilon_\gamma = \epsilon_\alpha + \epsilon_\beta >1$, an addendum coefficient ha satisfying ha = 0.1 to 0.5, and an absolute value of difference in addendum modification coefficients |X| satisfying |X|<0.1.

According to a further aspect of the invention, there is provided a gear transmission drive using an involute internal gear pair having a low tooth number differential, wherein the transmission drive includes a left case or housing portion and a right case or housing portion, an integrated or assembled double-ring gear composed of two coaxial external gear rings, one radially outside the other, the double-ring gear being supported by bearings on the eccentric portion of an eccentric shaft. The two gear rings of the double-ring gear respectively engage with a fixed-axis internal gear, which is fixed in the left case and a rotatable fixed axis internal gear which is installed in the right case through low-speed bearings. The eccentric shaft is carried by the left case and also cooperates with an output shaft through high-speed bearings, thus two gear pairs are formed wherein at least one of the gear pairs has the following parameters: the addendum coefficient ha < 0.55, the profile contact ratio $\epsilon_\alpha<1$, the total contact ratio $\epsilon_\gamma = \epsilon_\alpha + \epsilon_\beta \geq 0.7$, and the relationships among tooth number differential Zd, the difference X in addendum modification coefficients of the internal gear and the external gear, and the addendum coefficient ha satisfy the following table:

| Zd | X | ha |
|---|---|---|
| 1 | IXI ≤0.1 | 0.06 to 0.2 |
| 2 | IXI ≤0.1 | ≤ 0.35 |
| 3 or 4 | IXI ≤0.1 | ≤ 0.5 |

Preferably, the two gear pairs are helical gears, the two external gear rings are of same hand and the two internal gear rings are of the same hand. It is further preferred that the two gear rings of each gear pair have teeth widths at least partially overlapping axially with each other. In this connection, it is most desirable that the centers of the teeth widths of the two gear rings of each pair overlap axially.

## DETAILED DESCRIPTION OF THE INVENTION

In convenient planetary transmission with small tooth number difference, the loads applied to the planetary bearings include the peripheral force on the dividing circle of the engaged gear pair (tangential component of engaging force). In the double internal gear planetary transmission using the double-ring gear of the invention ,the peripheral forces applied respectively to the inner and outer gear rings of the double ring gear are opposite to each other, only their difference and the radial component of the engaging force act together on the planetary bearings, which greatly reduces the load on planetary bearings. Hence the lifetime of the bearings may be increased by four to dozens of times, the power loss in bearings reduced by two thirds and the load capacity of the transmission increases.

In order to reduce the load on the planetary bearings, a relatively small profile angle $\alpha$ may be used for the internal gear pair with involute tooth profile and small tooth number difference. The strength of the gear is naturally enough because of the internal engagement, small tooth number difference, relatively large tooth number and many pairs of simultaneously engaged teeth. In order to widen the limitation to the reduction of angle $\alpha$ due to undercut, flank profile interference and strength, the addendum coefficient $h_a$ may be greatly reduced (usually less than 0.5) and the positive addendum modification may be adopted with the modified coefficient difference equal to zero. Of course, the modified coefficients of both internal and external gears may be equal to zero and the profile angle $\alpha$ may be reduced to less than 20 degrees (till six degrees), 6 to 14 degrees is a particularly important range. With the decrease of angle $\alpha$, the radial component of the engaging force acting on the planetary bearings decreases, the coincidence increases and the engagement efficiency improves. In the double internal gear planetary transmission with the double ring gear, the radial component of the engaging force is the main force acting on the planetary bearings. Therefore, said small profile angle is of specific significance.

In order to further increase the engagement efficiency of the gear transmission, particularly the planetary gear transmission with small tooth number difference, for example double-ring gear transmission and prevent the interference to the gear pair with small tooth number difference composed of the double ring gear and its mates, the high-efficiency gear transmission according to the invention comprises an input shaft, an output shaft, bearings and extra short toothed involute gears.

If the extra short toothed gears are helical gears, its total coincidence $\epsilon_\gamma$ = end face coincidence $\epsilon_\alpha$ + toothed portion coincidence $\epsilon_\beta$. When it is ensured that the difference X between the modified coefficient $X_2$ of the inner gear and the modified coefficient $X_1$ of the outer gear of the internal gear pair is zero, or its absolute value is not more than 0.1, the engagement efficiency may usually be increased by reducing $\epsilon_\alpha$. After $\epsilon_\alpha$ is reduced, $\epsilon_\beta$ of the helical gear is increased to make $\epsilon_\gamma \geq 1$ (usually equal to 1). In some unusual circumstances where the influence of the multiple teeth contact of the internal engaged gear pair with small tooth number difference should be taken into consideration, it is suitable to make $\epsilon_\gamma \geq 0.7$ such a solution may also be employed to increase the engagement efficiency of the external engaged involute gear pair. In case of external engaged pair, $h_a$ may be reduced to less than 0.5 till 0.1 and at the same time $\epsilon_\beta$ may be increased (e.g. by increasing $\beta$ and widths of tooth, and reducing module, etc.) so as to make $\epsilon_\gamma \geq 1$. A detailed analysis of the internal engaged gear pair is made as follows: The procedures for calculation of $\epsilon_\alpha$ and $\epsilon_\beta$ are known. $\epsilon_\alpha$ may be reduced in the same way as the addendum coefficient $h_a$ is reduced, so as to avoid the possible profile interference when the tooth number difference between the inner and outer gears is very small. The optimum parameters are to be chosen in the following range: $|X| \leq 0.1$, preferably $X = X_2 - X_1 = 0$, $X_1 \geq 0$ $X_2 \geq 0$; dividing circle helical angle $\beta = 1° \sim 14°$ (helical gear) and $\beta = 25° \sim 60°$ (double helical spur gear); while tooth number difference $Z_d = 1$, $h_a = 0.06 \sim 0.2$; while $Z_d = 2$, $h_a = 0.2 \sim 0.35$, $h_a < 0.2$ is also allowable; while $Z_d = 3$ or 4, $h_a$ is usually not more than 0.5; the profile angle may be reduced as above mentioned, but it is preferred to be between 14° and 25° when the tooth number difference is 1. After $h_a$ is reduced, the manufacturing accuracy is to be increased correspondingly.

No matter whether the double ring gear is used or not, if helical gears are used in the double internal gear planetary transmission, the helices of two internal gear pairs must be in the same hand, either both are lefthanded, or both righthanded, so as to offset the axial forces acting on the planetary bearings. If straight tooth gears are used, the optimum tooth number difference is 4, 5 or 6, $h_a$ is $0.35 \sim 0.6$, the modified coefficient must meet $|X| \leq 0.05$, preferably $X = 0$.

The present invention also provides a high-efficiency gear transmission comprising an input shaft, an output shaft, bearings, said double-ring gear and at least one pair of extra short toothed gears, characterized as above, which greatly improves the efficiency of the gear transmission.

Other details, objects and advantages of the present invention will become apparent as the following description of the presently preferred embodiments and presently preferred methods of practising the invention proceeds.

Brief Description of the Drawing

A better understanding of the high-efficiency gear transmission of this invention will be afforded by refeence to the drawings wherein:

Fig. 1 is a section of the double-ring gear according to the invention.

Fig. 2 is an embodiment of the high-efficiency double internal gear transmission with a double-ring gear according to the invention

DESCRIPTION OF THE PREFERRED EMBODIMENT

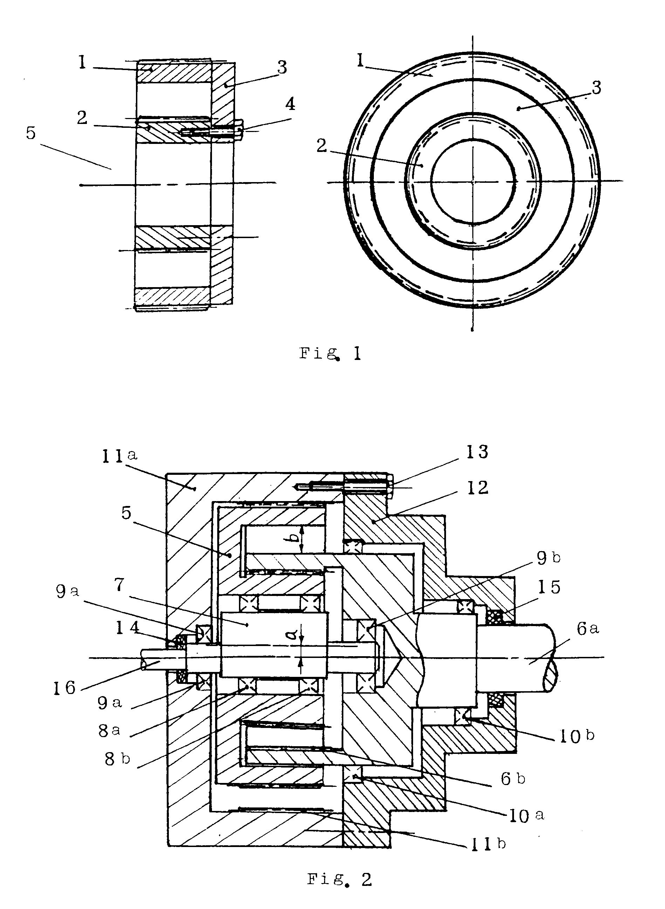

As a new type of gear structure used in the high-efficiency gear transmission according to the invention, a double-ring gear (5) (Fig. 1) is composed of two gear rings (1, 2) and one face plate (3) coaxially assembled together. The double-ring gear (5) is an annular double layer structure composed of a gear ring (1) coaxially installed outside a gear ring (2). Both gear rings (1, 2) having different tooth numbers are coaxially fixed on the same side of a face plate (3). The common axis of them is the axis of the double-ring gear (5). Bolt (4) is for connecting them. Other methods of connection may also be used. One of the gear rings may be made integral with the face plate to simplify the manufacture, if it is possible for gear manufacturing technology, both gear rings may be made integral with the face plate. Other methods for connecting the two gear rings may be used, if the characteristics of the double-ring gear according to the invention can be attained. the vertical projections of the centre lines of tooth widths of the two coaxial gear rings of the double-ring gear on the axis of the double-ring gear must coincide with each other into one point, i.e. the distance between the projections of the centre lines of tooth widths of the two coaxial gear rings in the axial direction of the double ring gear must be zero. If the distance is not zero in practical manufacturing process, it must be not more than 3/4 minimum tooth width of the same double-ring gear, preferably not more than 1/10. At least the tooth widths of the two gear rings of the double-ring gear coincide partially with each other in radial direction and their projections on the common axis coincide with each other. The gear rings of the double-ring gear must be both outer gears or inner gears. Outer gears are favourable for reducing the volume.

The double-ring gear is applicable mainly for the double internal gear transmission in the planetary transmission, i.e. the planetary transmission composed of two internal gear pairs. A basic structure of the double internal gear transmission provided with a double-ring gear is shown in figure 2. The double-ring gear 5 (shown as an integrated gear in the figure) is installed through planetary bearings 8a and 8b on the off centre of the eccentric shaft 7 which is integrated with input shaft (16). In this embodiment, both gear rings of the double ring gear are outer gears. The outer one of them is engaged with a fixed-axle internal gear 11b fixed in the left case 11a, while the inner one, with a rotating fixed-axle internal gear 6b integrated or assembled with a low-speed shaft i.e. output shaft 6a. The shaft 6a rests on the right case 12 through low speed bearings 10a and 10b. The eccentric shaft 7 rests on the left case 11a and on the output shaft 6a through high speed bearings 9a and 9b. 14 and 15 are oil sealings. 13 is a fastening bolt. The counterweight and other parts usually used but without special meaning here are not shown in figure 2. The kinematic principle of this mechanism is the same as that of the double internal gear planetary transmission. When eccentric shaft 7 rotates at high speed, it drives the double -ring gear 5 engaged with fixed-axle internal gears (11b and 6b) to perform planetary movement. Fixed-axle internal gear 6b drives output shaft 6a to rotate slowly. It must be noted that the position of double-ring gear 5 shown in figure 2 is the position when it moves to the highest point. The distance between the internal surface of the outer gear ring of the double-ring gear and the external surface of fixed-axle gear 6b engaged with the inner gear ring of the double-ring gear in case of the offset centre of eccentric shaft 7 in the highest position, i.e. the distance b shown in figure 2, must be more than twice offsetting a. Fixed-axle internal gear 11b may be made separately and then connected to leftcase 11a. The method for calculation of the speed ratio and efficiency of the double internal gear planetary transmission is known.

The design and calculation of the internal engaged gear pair with small tooth number difference have been introduced in many papers. There is no need to repeat here. It is necessary to point out that an angle modification with a relatively large X value has always been taken in prior art to meet the main conditions of profile interference and coincidence while achieving small tooth number difference, particularly 1 or 2-tooth difference. It is difficult to improve the engagement efficiency of the internal gear pair with small tooth number difference. The method for optimizng parameters in the invention can realize the internal engagement with 1 or 2-tooth number difference and non-angular modification while meeting all limiting conditions so as to attain high engagement efficiency. For instance, suppose profile angle $\alpha = 14.5°$, $\beta = 6°$, tooth number of external gear $Z_1 = 87$, tooth number of internal gear $Z_2 = 89$, $X_1 = X_2 = 0$, $h_a = 0.1$, tooth width $b = 80$ mm, module $m = 3.5$, according to the known method of calculation we attain: $\epsilon_\alpha = 0.26$, $\epsilon_\beta = 0.76$, $\epsilon_\gamma = 1.02$. The value of profile overlap interference indicator parameter $Gs = 0.0172$. When used for the double internal gear planetary reductor with reduction ratio $i = 1000$, its loss makes up just 9% of that according to the method of angle modification. The engagement efficiency of the engaged gear pair is about 0.9916.

If a pre-reduction stage is provided prior to the double internal gear planetary transmission with a double-ring gear to form a combined transmission, further advantages can be achieved which are impossible when they work separately. Their loss in engagement and bearing and hydraulic loss will decrease, the strength conditions will improve so that the load capacity increases, the temperature rises, vibration and noise will decrease, and the volume may be reduced. Because the planetary transmission with small tooth number difference has the advantage of large torgue on output end acting on its high-speed parts (e.g. bearings, etc.) and the double internal gear planetary transmission with double-ring gear is usually single-eccentric, so its dynamic balance is not easy to achieve. Its oil level is rather high, causing greater hydraulic loss. In this case, reducing input speed is quite favourable for increasing efficiency and improving transmission quality. The high speed ratio of the planetary transmission with small tooth number difference may greatly alleviate the contradictions between the speed ratio of the prestage and the volume strength, and efficiency. The optimum combination of transmission is as follows: The prestage is composed of a planetary transmission with a central sun wheel, which may be a modified version of those with fixed planetary rack and output internal gear. The main reduction stage is a double internal gear planetary transmission with double-ring gear. Good results can be achieved for other planetary transmissions with small tooth number difference when equipped with a prereduction stage, particularly the prereduction stage composed of a planetary transmission with a central sun wheel.

**Claims**

1. An involute internal gear pair, consisting of an inner gear and an outer gear, having a dividing circle helical angle $\beta$ satisfying $\beta>0$, a toothed portion coincidence $\epsilon_\beta$ satisfying $\epsilon_\beta>0$, wherein the gear pair has an addendum coefficient h*a, an end face coincidence $\epsilon_\alpha$ and total coincidence $\epsilon_\gamma$ satisfying h*a<0.55, $\epsilon_\alpha<1$ and $\epsilon_\gamma = \epsilon_\alpha + \epsilon_\beta \geq 0,7$, and the relationship among difference in tooth number Zd between the inner gear and the outer gear, difference in modified coefficient X between the inner gear and the outer gear ($X = X_2-X_1$), and the addendum coefficient h*a satisfying the following table:

| Zd | X | h*a |
|---|---|---|
| 1 | \|X\|≤0.1 | 0.06 to 0.2 |
| 2 | \|X\|≤0.1 | ≤0.35 |
| 3 or 4 | \|X\|≤0.1 | ≤0.5 |

2. The gear pair as claimed in claim 1, wherein said total coincidence $\epsilon_\gamma$ satisfy $\epsilon_\gamma = \epsilon_\alpha + \epsilon_\beta \geq 1$.

3. The gear pair as claimed in claim 2, wherein said difference in modified coefficient x, modified coefficient of inner gear $X_2$ and outer gear $X_1$, satisfy the following relationship:
   $X = 0$, $X_2 \geq 0$ and $X_1 \geq 0$.

4. The gear pair as claimed in claim 2, wherein said gear part is a helical gear pair, and said dividing circle helical angle $\beta$ is equal to 1° to 14°.

5. The gear pair as claimed in claim 2, wherein said gear pair is a double helical spur gear pair, and said dividing circle helical angle $\beta$ is equal to 25° to 60°.

6. The gear pair as claimed in claim 2, wherein said gear pair has a profile angle $\alpha$ satisfying the following relationship:

| Zd | $\alpha$ |
|---|---|
| 1 | 14° to 25° |
| ≥2 | 6° to 14° |

7. An involute internal gear pair, consisting of an inner gear and an outer gear, wherein the gear pair has a dividing circle helical angle $\beta$ satisfying $\beta = 0$, toothed portion coincidence $\epsilon_\beta$ satisfying $\epsilon_\beta = 0$, difference in modified coefficient x between the inner gear and outer gear satisfying $|X| < 0.05$, and an addendum coefficeint h*a satisfying h*a = 0.35 to 0.6.

8. The gear pair as claimed in claim 7, wherein said difference in modified coefficient X is equal to zero.

9. An involute external gear pair, consisting of an inner gear and an outer gear, having a dividing circle helicle angle $\beta$ satisfying $\beta>0$, a toothed portion coincidence $\epsilon_\beta$ satisfying $\epsilon_\beta>0$, wherein the gear pair has an addendum coefficient h*a, an end face coincidence $\epsilon_\alpha$ and total coincidence $\epsilon_\gamma$, and difference in modified coefficient X between the two gears of the gear pair satisfying $\epsilon_\alpha<1$ and $\epsilon_\gamma = \epsilon_\alpha + \epsilon_\beta>1$; h*a = 0.1 to 0.5, and $|X| \leq 0.1$.

10. A high-efficiency gear transmission using the involute gear pair as- claimed in claim 1 including left case (11a) and right case (12), and an integrated double-ring gear (5) composed of two coaxial radially arranged outer-gear rings (1, 2), one (1) of the rings being positioned outside of the another ring (2), said double-ring gear (5) being installed through bearings (8a, 8b) on the off centre of the eccentric shaft (7), two gear rings (1, 2) of the double-ring gear (5) respectively engaging with a fixed-axle internal gear (11b), which fixed in the left case (11a) and a rotatable fixed-axle internal gear (6b) which is installed in the right case (12) through low-speed bearings (10a, 10b), and eccentric shaft (7) resting on the left case (11a) and on the output shaft (6a) through bearings (9a, 9b) respectively, thus two gear pairs (1, 11b and 2, 6b) being formed, wherein at least one of the gear pairs (1, 11b and 2, 6b) has an addendum coefficient h*a, an end face coincidence $\epsilon_\alpha$ and total coincidence $\epsilon_\gamma$ satisfying h*a<0.55, $\epsilon_\alpha$<1 and $\epsilon_\gamma = \epsilon_\alpha + \epsilon_\beta \geq 0,7$ and the relationship among difference in tooth number Zd between the inner gear and the outer gear, difference in modified coefficeint X between the inner gear and the outer gear (x = $x_2$-$x_1$), and the addendum coefficient h*a satisfying the following table:

| Zd | X | h*a |
|---|---|---|
| 1 | IXI≤0.1 | 0.06 to 0.2 |
| 2 | IXI≤0.1 | ≤0.35 |
| 3 or 4 | IXI≤0.1 | ≤0.5 |

**11.** The gear transmssion as claimed in claim 10, wherein said two gear pairs (1, 11b and 2, 6b) are helical gears, and two gear rings (1, 2) are of same hand, and so are the two internal gears (11b, 6b).

**12.** The gear transmission as claimed in claim 10, wherein the two gear rings (1, 2) have tooth widthes overlapping axially with each other.

**13.** The gear transmission as claimed in claim 12 wherein the centres of the tooth widths of the two gear rings (1, 2) are coincident.

**Patentansprüche**

**1.** Evolventen-Innenradpaar, das ein inneres Rad und ein äußeres Rad aufweist und einen Teilkreis-Schrägungswinkel $\beta$, der $\beta$ > 0 erfüllt, und eine Sprungüberdeckung $\epsilon_\beta$ hat, die $\epsilon_\beta$ > 0 erfüllt, wobei das Radpaar einen Profilverschiebungsfaktor ha*, eine Profilüberdeckung $\epsilon_\alpha$ und eine Gesamtüberdeckung $\epsilon_\gamma$ hat, die ha* < 0,55, $\epsilon_\alpha$ < 1 und $\epsilon_\gamma = \epsilon_\alpha + \epsilon_\beta \geq 0,7$ erfüllen, und die Beziehung zwischen der Differenz der Zähnezahl Zd zwischen dem inneren Rad und dem äußeren Rad, der Differenz der Profilverschiebungen X zwischen dem inneren Rad und dem äußeren Rad (X = $X_2$-$X_1$) und dem Profilverschiebungsfaktor ha* die folgende Tabelle erfüllt:

| Zd | X | ha* |
|---|---|---|
| 1 | IXI ≤ 0,1 | 0,06 bis 0,2 |
| 2 | IXI ≤ 0,1 | ≤ 0,35 |
| 3 oder 4 | IXI ≤ 0,1 | ≤ 0,5 |

**2.** Radpaar nach Anspruch 1, wobei die Gesamtüberdeckung $\epsilon_\gamma$ $\epsilon_\gamma = \epsilon_\alpha + \epsilon_\beta \geq 1$ erfüllt.

**3.** Radpaar nach Anspruch 2, wobei die Differenz der Profilverschiebungen x, die Profilverschiebung des inneren Rads $X_2$ und des äußeren Rads $X_1$ die folgende Beziehung erfüllen:
X = 0, $X_2 \geq 0$ und $X_1 \geq 0$.

**4.** Radpaar nach Anspruch 2, wobei das Radbauteil ein Schrägverzahnungsradpaar ist und der Teilkreis-Schrägungswinkel $\beta$ gleich 1° bis 14° ist.

**5.** Radpaar nach Anspruch 2, wobei das Radpaar ein Doppelschrägverzahnungs-Stirnradpaar ist und der Teilkreis-Schrägungswinkel $\beta$ gleich 25° bis 60° ist.

**6.** Radpaar nach Anspruch 2, wobei das Radpaar einen Profilwinkel $\alpha$ hat, der die folgende Beziehung erfüllt:

8

| Zd | $\alpha$ |
|----|----------|
| 1 | 14° bis 25° |
| ≥2 | 6° bis 14° |

7. Evolventen-Innenradpaar, das ein inneres Rad und ein äußeres Rad aufweist, wobei das Radpaar einen Teilkreis-Schrägungswinkel $\beta$, der $\beta = 0$ erfüllt, eine Sprungüberdeckung $\epsilon_\beta$, die $\epsilon_\beta = 0$ erfüllt, eine Differenz der Profilverschiebungen X zwischen dem inneren Rad und dem äußeren Rad, die $|X| < 0,05$ erfüllt, und einen Profilverschiebungsfaktor ha* hat, der ha* $= 0,35$ bis $0,6$ erfüllt.

8. Radpaar nach Anspruch 7, wobei die Differenz der Profilverschiebungen X gleich Null ist.

9. Evolventen-Außenradpaar, das ein inneres Rad und ein äußeres Rad aufweist und einen Teilkreis-Schrägungswinkel $\beta$, der $\beta > 0$ erfüllt, und eine Sprungüberdeckung $\epsilon_\beta$ hat, die $\epsilon_\beta > 0$ erfüllt, wobei das Radpaar einen Profilverschiebungsfaktor ha*, eine Profilüberdeckung $\epsilon_\alpha$ und eine Gesamtüberdeckung $\epsilon_\gamma$ und eine Differenz der Profilverschiebungen X zwischen den zwei Rädern des Radpaares hat, die $\epsilon_\alpha < 1$ und $\epsilon_\gamma = \epsilon_\alpha + \epsilon_\beta > 1$, ha* $= 0,1$ bis $0,5$ und $|X| \leq 0,1$ erfüllen.

10. Zahnradgetriebe mit hohem Wirkungsgrad unter Verwendung des Evolventen-Radpaars nach Anspruch 1, das ein linkes Gehäuse (11a) und ein rechtes Gehäuse (12) und ein einstückiges Rad (5) mit zwei Zahnkränzen aufweist, das sich aus zwei koaxialen, radial angeordneten Außenzahnrad-Zahnkränzen (1, 2) zusammensetzt, wobei sich einer (1) der Zahnkränze außerhalb des anderen Zahnkranzes (2) befindet, das Rad (5) mit zwei Zahnkränzen über Lager (8a, 8b) an der außermittigen Lage der exzentrischen Welle (7) angebracht ist, wobei die zwei Zahnkränze (1, 2) des Rads (5) mit zwei Zahnkränzen mit einem Innenzahnrad (11b) mit ortsfester Achse, das im linken Gehäuse (11a) befestigt ist, bzw. einem drehbaren Innenzahnrad (6b) mit ortsfester Achse, das über Niedriggeschwindigkeits-Lager (10a, 10b) im rechten Gehäuse (12) angebracht ist, in Eingriff stehen und sich die exzentrische Welle (7) über Lager (9a, 9b) am linken Gehäuse (11a) bzw. an der Abtriebswelle (6a) stützt, womit zwei Radpaare (1, 11b und 2, 6b) ausgebildet sind, wobei zumindest ein Radpaar der Radpaare (1, 11b und 2, 6b) einen Profilverschiebungsfaktor ha*, eine Profilüberdeckung $\epsilon_\alpha$ und eine Gesamtüberdeckung $\epsilon_\gamma$ hat, die ha* $< 0,55$, $\epsilon_\alpha < 1$ und $\epsilon_\gamma = \epsilon_\alpha + \epsilon_\beta \geq 0,7$ erfüllen, und die Beziehung zwischen der Differenz der Zähnezahl Zd zwischen dem inneren Rad und dem äußeren Rad, der Differenz der Profilverschiebungen X zwischen dem inneren Rad und dem äußeren Rad ($x = x_2 - x_1$) und dem Profilverschiebungsfaktor ha* die folgende Tabelle erfüllt:

| Zd | X | ha* |
|----|---|-----|
| 1 | $|X| \leq 0,1$ | 0,06 bis 0,2 |
| 2 | $|X| \leq 0,1$ | ≤ 0,35 |
| 3 oder 4 | $|X| \leq 0,1$ | ≤ 0,5 |

11. Zahnradgetriebe nach Anspruch 10, wobei die zwei Radpaare (1, 11b und 2, 6b) Schrägzahnräder sind und die zwei Zahnkränze (1, 2) sowie die zwei Innenzahnräder (11b, 6b) gleichen Sinn haben.

12. Zahnradgetriebe nach Anspruch 10, wobei die zwei Zahnkränze (1, 2) Zahnbreiten haben, die einander axial überdecken.

13. Zahnradgetriebe nach Anspruch 12, wobei die Mittelpunkte der Zahnbreiten der zwei Zahnkränze (1, 2) zusammenfallen.

**Revendications**

1. Un couple d'engrenage intérieur en développante de cercle, composé d'une roue d'engrenage intérieure et d'une roue d'engrenage extérieure, ayant un angle hélicoïdal de division de cercle $\beta$

satisfaisant à $\beta > o$, une coïncidence de partie dentée $\epsilon_\beta$ tel que $\epsilon_\beta > o$, dans lequel le couple d'engrenage présente un coefficient de départ h*a, une coïncidence de face d'extrémité $\epsilon_\alpha$ et une coïncidence totale $\epsilon_\gamma$ tel que h*a < 0,55, $\epsilon_\alpha$ < 1 et $\epsilon_\gamma = \epsilon_\alpha + \epsilon_\beta \geq 0,7$, et la relation entre la différence de nombres de dents Zd entre la roue d'engrenage intérieure et la roue d'engrenage extérieure, exprimée par le coefficient modifié X entre la roue d'engrenage intérieure et la roue d'engrenage extérieure ($X = X_2 - X_1$), et le coefficient de déport de la dent h*a satisfait au tableau suivant:

| Zd | X | h*a |
|---|---|---|
| 1 | IXI ≦0,1 | 0,06 à 0,2 |
| 2 | IXI ≦0,1 | ≦ 0,35 |
| 3 or 4 | IXI ≦0,1 | ≦ 0,5 |

2. Le couple d'engrenage tel que revendiqué à la revendication 1, dans lequel ladite coïncidence totale $\epsilon_\gamma$ satisfait à $\epsilon_\gamma = \epsilon_\alpha + \epsilon_\beta \geq 1$.

3. Le couple d'engrenage tel que revendiqué à la revendication 2, dans lequel ladite différence du coefficient modifié X, le coefficient modifié de la roue d'engrenage intérieure $X_2$ et de la roue d'engrenage extérieure $X_1$, satisfait à la relation suivante: X = 0, $X_2 \geq 0$ et $X_1 \geq 0$.

4. Le couple d'engrenage tel que revendiqué à la revendication 2, dans lequel l'engrenage est un couple d'engrenage hélicoïdal, et ledit angle hélicoïdal de division de cercle $\beta$ est égal à 1° à 14°.

5. Le couple d'engrenage tel que revendiqué à la revendication 2, dans lequel ledit couple d'engrenage est un couple d'engrenage à chevron ou à double hélice, et ledit angle hélicoïdal de division de cercle $\beta$ est égale à 25 à 60°.

6. Le couple d'engrenage tel que revendiqué à la revendication 2, dans lequel ledit couple d'engrenage présente un angle de profil $\alpha$ satisfaisant à la relation suivan

| Zd | $\alpha$ |
|---|---|
| 1 | 14° à 25° |
| ≧2 | 6° à 14° |

7. Un couple d'engrenage intérieur en développante de cercle, composé d'une roue d'engrenage intérieure et d'une roue d'engrenage extérieure, dans lequel le couple d'engrenage présente un angle hélicoïdal de division de cercle $\beta$ satisfaisant à $\beta = 0$, une coïncidence de partie dentée $\epsilon_\beta$ satisfaisant à $\epsilon_\beta = 0$, une différence de coefficient modifié X entre la roue d'engrenage intérieure et la roue d'engrenage extérieure satisfaisant à $|X| \leq 0,05$ et un coefficient de déport h*a satisfaisant à h*a = 0,35 à 0,6.

8. Le couple d'engrenage tel que revendiqué à la revendication 7, dans lequel ladite différence du coefficient modifié est égal à zéro.

9. Un couple d'engrenage intérieur en développante de cercle, composé d'une roue d'engrenage intérieure et d'une roue d'engrenage extérieure, ayant un angle hélicoïdal de division de cercle $\beta$ satisfaisant à $\beta > o$, une coïncidence de partie dentée $\epsilon_\beta$ satisfaisant à $\epsilon_\beta >$ à 0, dans lequel le couple d'engrenage a un coefficient de déport h*a, une coïncidence de face d'extrémité $\epsilon\alpha$ et une coïncidence totale $\epsilon\gamma$, et la différence du coefficient modifié X entre les deux roues d'engrenage du couple d'engrenage satisfait à $\epsilon\alpha < 1$ et $\epsilon\gamma = \epsilon\alpha + \epsilon_\beta > 1$; h*a = 0,1 à 0,5 et $|X| \leq 0,1$.

10. Une transmission à engrenage à haut rendement, utilisant le couple d'engrenage en développante tel que revendiqué à la revendication 1, comportant un carter gauche (11a) et un carter droit (12), et un ensemble monobloc à deux roues d'engrenage concentrique (5) composé de deux couronnes à denture extérieure (1,2) disposées radialement, l'une (1) des couronnes étant disposée à l'extérieur par rapport à l'autre couronne (2), ladite roue d'engrenage à double couronne (5) étant montée par des paliers (8a, 8b) sur le centre excentré de l'arbre excentrique (7) , deux couronnes de roue d'engrenage (1, 2) de la roue d'engrenage à double couronne (5) engrènant respectivement avec une roue d'engrenage à denture intérieure (11b) à axe fixe, qui est fixée dans le carter gauche (11a) et une roue d'engrenage intérieure tournante à axe fixe (6b) qui est montée dans le carter droit (12) sur des paliers à faible vitesse (10a, 10b), et un arbre excentrique (7) monté, respectivement, par des paliers (9a, 9b) sur le boîtier gauche (11a) et sur l'arbre de sortie (6a), de manière à former ainsi deux couples d'engrenage (1, 11b et 2, 6b), dans laquelle au moins l'un des couples d'engrenage (1, 11b et 2, 6b) présente un coefficient de déport h*a, une coïncidence de face d'extrémité $\epsilon\alpha$ et une coïncidence totale $\epsilon_\gamma$ satisfaisant à h*a < 0,55, $\epsilon\alpha$ < 1 et $\epsilon_\gamma = \epsilon_\alpha + \epsilon_\beta \geq 0,7$ et la relation entre la différence du nombre de dents Zd entre la roue d'engrenage intérieure et la roue d'engrenage extérieure, exprimée par le coefficient modifié X entre la roue d'engrenage intérieure et la roue d'engrenage extérieure (x = x2-x1), et le coefficient de déport h*a satisfaisant au tableau suivant:

| Zd | X | h*a |
|---|---|---|
| 1 | IXI ≤0,1 | 0,06 à 0,2 |
| 2 | IXI ≤0,1 | ≤ 0,35 |
| 3 or 4 | IXI ≤0,1 | ≤ 0,5 |

11. La transmission à engrenage telle que revendiquée à la revendication 10, dans laquelle lesdits deux couples d'engrenage (1, 11b et 2, 6b) sont des roues d'engrenage hélicoïdales et les deux couronnes d'engrenage (1, 2) sont monobloc, et qu'il en est de même pour les deux roues d'engrenage intérieures (11b, 6b).

12. La transmission à engrenage telle que revendiquée à la revendication 10, dans laquelle les deux couronnes d'engrenage (1, 2) présentent des largeurs de denture se recouvrant mutuellement axialement.

13. La transmission à engrenage telle que revendiquée à la revendication 12, dans laquelle les centres des largeurs des dentures des deux couronnes d'engrenage (1, 2) coïncident.

Fig. 1

Fig. 2